# NEW EUROPEAN PATENT SPECIFICATION

(11) **EP 2 826 831 B2**
(45) Date of publication and mention of the opposition decision: **10.01.2024**
(45) Mention of the grant of the patent: 27.03.2019
(21) Application number: 13176743.6
(22) Date of filing: 16.07.2013
(51) Int. Cl.: C09J 133/08, C09J 131/04, C09J 125/08, B29L 31/00, B29C 65/48, C08J 5/12, C09J 153/02

(54) **Use of hot-melt adhesive for the collation of containers and bottles for beverages or food into shelf ready packs of various items**
Verwendung von Heißschmelzkleber zur Kollation von Behältern und Flaschen für Getränke oder Lebensmittel in regalfertige Packs verschiedener Gegenstände
Utilisation d'un adhésif thermofusible pour le regroupement de récipients et de bouteilles destinés à des boissons ou aliments dans des emballages prêts à vendre de divers articles

(43) Date of publication of application: 21.01.2015
(73) Proprietor: KHS GmbH, 44143 Dortmund (DE)
(72) Inventor: Schneider, Jörg, 28205 Bremen (DE)
(74) Representative: Scholz, Volker

(56) References cited:
- EP-A1- 0 798 358
- EP-A1- 1 241 239
- EP-A1- 1 566 423
- EP-A1- 2 826 831
- EP-B1- 0 631 946
- WO-A1-2013/004341
- WO-A1-2014/191132
- CA-A1- 2 131 765
- DE-A1- 2 331 193
- DE-A1- 10 116 022
- US-A- 4 822 653
- US-A- 5 076 430
- US-A- 5 331 038
- US-A1- 2008 306 214

## Description

### 1) Field of the invention

Hot-melt adhesives are widely used for various commercial and industrial applications such as product assembly and packaging. Such hot-melt adhesives are applied to a substrate while in its molten state and cooled to harden the adhesive layer.

### 2) Background of the invention

Traditionally the formation of multiple containers for beverages or food to form a pack of various items (in the following abbreviated in "multipack") has only been possible by the employment of a shrink sleeve film, cardboard outer wrap or a mechanical locking / holding arrangement.

There are inherent problems with the shrink sleeve multipack arrangement in that the individual containers are difficult to remove. Often sharp tools are used to open the secondary packaging with the result that without purpose the product containers are damaged. The cardboard overwrap can also be problematic as the construction can be unstable, particularly with heavier shaped containers.

Both methods (shrink sleeve and cardboard) or other secondary packaging involve the use of packaging materials in addition to the beverage or food container, leading to higher levels of packaging waste.

Current commercial hot-melt adhesive formulations do not provide the necessary performance characteristics necessary for application.

EP 1 566 423 A1 discloses a low viscosity hot-melt adhesive composition for non-wovens.

EP 1 241 239 A1 discloses an UV-resistant hot melt pressure sensitive additive.

EP 0 798 358 A1 discloses a styrene-isoprene-styrene-based labeling pressure sensitive adhesive.

US 2008/306214 A1 discloses a hot-melt adhesive based on styrene-ethylene-ethylenepropylene-styrene copolymer.

To fulfil this function, the adhesive must display a very high level of cohesive strength, heat resistance and provide good levels of adhesion to the container in transit and storage in a wide variety of ambient conditions. But when the multipack reaches the consumer, the individual containers have to be relatively easy to be separated allowing individual consumption of the contents of the containers.

The adhesive mixture herein mentioned has been carefully designed and constructed to provide sufficient durability and adhesion to hold the containers together until the consumer desires separation. The adhesive mixture has to have sufficient adhesion to the substrates to hold the containers together in a broad range of ambient conditions, including high and low temperatures, high and low humidity and environments with high UV exposure. The adhesive mixture must also have sufficient flexibility to allow expansion in the adhesive joint as the container expands and contracts during its exposure to the different prevailing environmental conditions.

The adhesive must be able to be applied easily in a high speed automated process, concurrent with a modern high speed beverage or food filling or processing line / machine.

### 3) Detailed description of the invention

All documents cited herein are incorporated in their entireties by reference.

The object to be solved by the present invention is to provide adhesive mixtures for adhering containers, such as PET-bottles, cans or glass bottles having sufficient durability and adhesion to hold the container together until the consumer desires separation.

The adhesive mixture has to have sufficient adhesion to the substrates to hold the containers together in a broad range of ambient conditions, including high and low temperatures high and low humidity and environments with high UV exposure. The adhesive mixture must also have sufficient flexibility to allow expansion in the adhesive joint as the container expands and contracts during its exposure to the different prevailing environmental conditions.

Further, a hot-melt adhesive mixture for use in the temporary bonding, attachment and collation of multiple containers for beverages or food to form a pack of various items in an automated application process, without the use of secondary / external packaging, overcoming drawbacks of the prior art shall be provided.

The purpose of this invention is to provide the multipack arrangement but greatly reducing the amount of packaging material used in the formation.

The above object is achieved in accordance with the subject-matter of claim 1.

Preferably, the hot-melt adhesive compound is obtainable from the inventive hot-melt adhesive mixture.

More preferably, the hot-melt adhesive compound is obtainable by blending.

Most preferably, the hot-melt adhesive mixture and/or the hot-melt adhesive compound have a relatively flat elastic modulus from -20°C to 50°C, extremely good heat stability, Tg of about-32°C, fogging temperature above 100°C, low volatiles content over 0,10% after two hours at 110°C or mixtures thereof.

The inventive hot-melt adhesive mixture and/or the inventive hot-melt adhesive compound having a high level of cohesive strength, heat resistance, good adhesion to the preferably beverage and/or food containers in transit and storage in a wide variety of ambient conditions. At the same time, when the multipack reaches the consumers the hot-melt adhesive specific properties enables the consumers to separate easily the containers allowing individual consumption of the contents of the containers.

Surprisingly it was found that the mixtures and compounds described herein have the advantage of greatly reducing the amount of packaging in a multipack construction while providing a stable multipack which is easily separated by the consumer.

Described herein is a hot-melt adhesive mixture to adhere multiple containers for beverages or food to form a pack of various items in an automated application process, without the use of secondary/ external packaging comprising of:
(a) Polymer component in the range of 7-48% of the composition by weight comprising of a singular polymer or blend of polymers based on Styrenic block co-polymers, Ethylene Butyl Acrylate / Vinyl Acetate, catalysed Elastomers.
(b) Tackifying component in the range of 15-52% comprising of thermoplastic adhesive resins either a singular component or a blend of aliphatic, cycloaliphatic and aromatic hydrocarbons and modified hydrocarbons and hydrogenated versions; terpenes and modified terpenes and hydrogenated versions; and rosins and rosin derivatives and hydrogenated versions.
(c) A plasticizer component in the range of 5-25% comprising of Paraffinic or napthenic oils, Polybutene or dibasic esters and/or Polyols.
d) A stabilizer component in the range of 0.02 - 1.2% comprising of Steric hindered phenolic antioxidant and Hindered amine light stabilizer.

The resulting compound from the blending of the above mentioned parts a, b, c, and d together, results to form a hot-melt adhesive compound having the following physical characteristics: a density of between 0.790 - 1.2 g/cm3 a melt flow index of 15 - 4000 g/min (@200°C). A Brookfield viscosity @160°C between 200 and 10,000 cPs. The shore hardness of the mixture will be in the range of 15 and 70A at 23°C according to ASTM D2240. The compound will also have a softening point determined by ASTM E28 above 40°C and not greater than 158°C.

The hot-melt adhesive preferably provides a relatively flat elastic modulus from -20°C to 50°C, extremely good heat stability, Tg of about -32°C, fogging temperature above 100°C, and low volatiles content over 0,10% after two hours at 110°C.

The adhesive provides a high level of cohesive strength, heat resistance and good adhesion to the (beverage or food) containers in transit and storage in a wide variety of ambient conditions. At the same time, when the multipack reaches the consumers the hot-melt adhesive specific properties enables the consumers to separate easily the containers allowing individual consumption of the contents of the containers.

Described herein is a mixture of:
(a) polymers comprising of a blend of styrenic block co-polymers including Styrene Ethylene Styrene, Styrene Ethylene Propylene, Styrene isoprene Styrene, Styrene Butylene Styrene, Ethylene Butyl Acrylate/ Vinyl Acetate.
(b) tackifying components comprising of adhesive resins namely aliphatic, cycloaliphatic and aromatic hydrocarbons and modified hydrocarbons and hydrogenated versions; terpenes and modified terpenes and hydrogenated versions; rosins and rosin derivatives and hydrogenated versions; and mixtures thereof. These tackifying resins have a ring and ball softening point from 70 °C to 150 °C, and will typically have a viscosity at 350 °F (177 °C) as measured using a Brookfield viscometer, of no more than 2000 cPs (20 grams/cm second).
(c) A plasticizer component comprising of Paraffinic or napthenic oils, Polybutene or dibasic esters and/or Polyols.
(d) A stabilizer component comprising of Steric hindered phenolic antioxidant and Hindered amine light stabilizer. By common knowledge this mixture is referred to as a hotmelt adhesive.

Due to the nature of the application each named component may be comprised of a singular component or a blend of components in order to achieve the desired properties. The ratio of each particular component are as follows:
(a) polymer segment 7-48% by weight,
(b) tackifying component 15- 52% by weight,
(c) Plasticizer component 5-25% by weight,
(d) Stabilizer component 0.02 % - 1.2 % by weight.

The homogenous mixture of these components will have a density of between 0.790 - 1.2 g/cm³ a melt flow index of 15 - 4000 g/min (@160°C). A brookfield viscosity @160°C between 200 and 10,000 cPs. The shore hardness of the mixture will be in the range of 15 and 70A at 23°C.

The adhesive blend can be made in a heated mixing vessel of the planetary type, z blade or ribbon type. Heat must be applied to the walls of the vessel evenly to avoid thermal degradation during processing. Processing temperature is in the 100 - 160°C range. A vacuum should be applied during the blending process to avoid the incorporation of air. The mixture can also be prepared using a single screw or twin screw extruder with a heated barrel using moderate shear rates.

The unique properties of the adhesive mixture described herein are provided by the specific interaction between the specific components herein mentioned.

Described herein is a mixture of: (a) polymers comprising of a blend of A-B-A Hydrogenated Styrene / butadiene co-polymers, a commercially known example of this product is the Kraton G series of polymers; (b) tackifying component consisting of a blend of Polydicyclopentadiene (PDCPD) polymer resin, formed through opening metathesis polymerisation (ROMP) which have a ring and ball softening point from 70 to 150°C, and will typically have a viscosity of 350°F (177°C) as measured using a Brookfield viscosimeter, of no more then 3000 centipoise (20 grams / cm second), a commercially known example of this product is Escorez 5000 series, (c) a plasticizer component comprising of paraffinic oils, a commercially available example of this product is Primol 352; (d) a end block reinforcing component comprising of steric hindered phenolic antioxidant and hindered amine light stabilizer.

By common knowledge this mixture is referred to as a hotmelt adhesive.

The use of A-B-A hydrogenated styrene butadiene block copolymer with a hydrogenated midblock in conjunction with the PDCPD and AMS polymers provides the desired properties.

The alpha methyl styrene polymer being purely aromatic in nature only has the ability to act upon the styrene domain of the ABA block co-polymers. This effect is greatly enhanced by the fact that this range of block co-polymers has a saturated midblock when compare to a traditional SIS or SBS block co-polymer.

This has the effect of increasing the cohesive strength and heat resistance of the adhesive product without affecting the other properties of the adhesive. The PDCPD polymers act with the mid block only of the block copolymer, providing the level of tack and adhesion needed to fulfil the application.

The plasticizer selected acts upon the adhesive to increase the flexibility and reduce the viscosity to a suitable level without reducing the cohesive strength and thermal resistance of the adhesive to undesirable levels.

This invention relates to the use of a hot-melt adhesive mixture for the temporary bonding, attachment and collation of multiple containers for beverages or food to form a pack of various items in an automated application process, without the use of secondary / external packaging.

A hot-melt adhesive mixture for the joining and collation of multiple containers for beverages or food to form a pack without the use of a shrink sleeve film, cardboard or any other secondary or external packaging.

The hot-melt adhesive mixture comprises of:
(a) a polymer mixture, which comprises of a mixture of commercially available polymers based on Styrenic block co-polymers, and/or Ethylene vinyl acetate co-polymers.
(b) A tackifying component to provide adhesion comprising of aliphatic, cycloaliphatic and aromatic hydrocarbon resins, terpenes and modified terpenes and hydrogenated versions and rosin derivaties and hydrogenated versions and mixtures thereof.
(c) A plasticizer component comprising of Paraffinic or napthenic oils, Polybutene or dibasic esters and/or Polyols.
(d) A stabilizer element comprising of Steric hindered phenolic antioxidant and hindered amine light stabilizer.

The adhesive is applied directly or indirectly to the container by means of automatic jet, wheel or any other appropriate method.

The adhesive mixture has a softening point determined by ASTM E28 above 40°C and not greater than 158°C, a melt flow index of 15 - 4000 g/min (@200°C). A Brookfield viscosity @160°C between 200 and 10,000 cPs A shore hardness determined by ASTM D2240 of between 15 and 70 A.

Upon reaching the consumer the containers can be separated from each other prior to use. The adhesive on the container surface can be removed by mechanical means to aid recycling.

The formulation is containing the following substances:

| | CAS number | Approximate content |
|---|---|---|
| 2. C 5 hydrocarbon resins | 64742-16-1 | 33 % - 42% |
| 3. Oil | 8042-47-5 | 16% - 21 % |
| 4. SEBS RUBBERS | 66070-58-4 | 34% - 41% |
| 5. Antioxidant | 6683-19-8 | 1% |

The features disclosed in the foregoing description and/or in the claims may, both separately and in any combination thereof, be material for realizing the invention in diverse forms thereof.

## Claims

1. Use of a hot-melt adhesive mixture for adhering multiple containers for beverages or food to form a pack of various items in an automated application process, without the use of secondary / external packaging, wherein the hot-melt adhesive mixture comprises:
(a) a polymer component in the range of 7-48 parts by weight with regard to the total weight of the mixture comprising at least one styrenic block co-polymer;
(b) a tackifying component in the range of 15-52 parts by weight with regard to the total weight of the mixture comprising a thermoplastic adhesive resin, aliphatic hydrocarbon, cycloaliphatic hydrocarbon, aromatic hydrocarbon, modified hydrocarbon, hydrogenated versions thereof; terpenes, modified terpene, hydrogenated versions; rosins, rosin derivatives thereof, hydrogenated versions thereof or mixtures thereof; and
(c) a plasticizer component in the range of 5-25 parts by weight with regard to the total weight of the mixture comprising paraffinic oils, napthenic oils, polybutene, dibasic esters, polyols or mixtures thereof; and
d) a stabilizer component in the range of 0.02 - 1.2 parts by weight with regard to the total weight of the mixture comprising steric hindered phenolic antioxidant and/or hindered amine light stabilizer,
wherein the hot-melt adhesive compound has a density of between 0.790 - 1.2 g/cm³, a melt flow index of 15 - 4000 g/min (@200°C), a Brookfield viscosity @ 160°C between 200 and 10,000 cPs, a Shore hardness in the range of 15 and 70 A at 23°C according to ASTM D2240, and a softening point determined by ASTM E28 above 40°C and not greater than 158°C.

## Patentansprüche

1. Verwendung einer Heißschmelzklebstoffmischung zum Verkleben mehrerer Behälter für Getränke oder Lebensmittel zur Bildung eines Packs verschiedener Gegenstände in einem automatisierten Anwendungsverfahren ohne die Verwendung von Sekundär-/Außenverpackungen, wobei die Heißschmelzklebstoffmischung umfasst:
(a) eine Polymerkomponente im Bereich von 7-48 Gewichtsteilen, bezogen auf das Gesamtgewicht der Mischung, die mindestens ein Styrolblockcopolymer umfasst;
(b) eine klebrigmachende Komponente im Bereich von 15-52 Gewichtsteilen, bezogen auf das Gesamtgewicht der Mischung, die ein thermoplastisches Klebstoffharz, aliphatischen Kohlenwasserstoff, cycloaliphatischen Kohlenwasserstoff, aromatischen Kohlenwasserstoff, modifizierten Kohlenwasserstoff, hydrierte Versionen davon; Terpene, modifiziertes Terpen, hydrierte Versionen; Kolophoniumharze, Kolophoniumderivate davon, hydrierte Versionen davon oder Mischungen davon umfasst; und
(c) eine Weichmacherkomponente im Bereich von 5-25 Gewichtsteilen, bezogen auf das Gesamtgewicht der Mischung, die Paraffinöle, Naphthenöle, Polybuten, zweibasische Ester, Polyole oder Mischungen davon umfasst; und
d) eine Stabilisatorkomponente im Bereich von 0,02-1,2 Gewichtsteilen, bezogen auf das Gesamtgewicht der Mischung, die sterisch gehindertes phenolisches Antioxidationsmittel und/oder gehindertes Aminlichtschutzmittel umfasst,
wobei die Heißschmelzklebstoffverbindung eine Dichte zwischen 0,790-1,2 g/cm³, einen Schmelzindex von 15-4000 g/min (bei 200°C), eine Brookfield-Viskosität bei 160 °C zwischen 200 und 10 000 cPs, eine Shore-Härte im Bereich von 15 und 70 A bei 23°C gemäß ASTM D2240 und einen durch ASTM E28 bestimmten Erweichungspunkt über 40 °C und nicht über 158 °C aufweist.

## Revendications

1. Utilisation d'un mélange d'adhésifs thermofusibles pour coller plusieurs récipients pour boissons ou aliments afin de former un paquet de divers articles dans un procédé d'application automatisé, sans utiliser un suremballage/emballage externe, où le mélange d'adhésifs thermofusibles comprend :
(a) un composant polymère présent en une quantité située dans la plage allant de 7 à 48 parties en poids par rapport au poids total du mélange comprenant au moins un copolymère séquencé styrénique ;
(b) un composant poisseux présent en une quantité située dans la plage allant de 15 à 52 parties en poids par rapport au poids total du mélange comprenant une résine adhésive thermoplastique, un hydrocarbure aliphatique, un hydrocarbure cycloaliphatique, un hydrocarbure aromatique, un hydrocarbure modifié, des versions hydrogénées de ceux-ci ; des terpènes, des terpènes modifiés, des versions hydrogénées ; des colophanes, des dérivés de colophanes, des versions hydrogénées de celles-ci ou des mélanges de ceux-ci ; et
(c) un composant plastifiant présent en une quantité située dans la plage allant de 5 à 25 parties en poids par rapport au poids total du mélange comprenant des huiles paraffiniques, des huiles naphténiques, du polybutène, des esters dibasiques, des polyols ou des mélanges de ceux-ci ; et
(d) un composant stabilisant présent en une quantité située dans la plage allant de 0,02 à 1,2 partie en poids par rapport au poids total du mélange comprenant un antioxydant phénolique à encombrement stérique et/ou un photostabilisant à amine encombrée.
dans lequel le composé d'adhésifs thermofusibles a une densité comprise entre 0,790 et 1,2 g/cm³, un indice de fluidité compris entre 15 et 4000 g/min @ 200°C), une viscosité de Brookfield @ 160°C comprise entre 200 et 10 000 cPs, une dureté de Shore dans la plage allant de 15 à 70 A à 23°C selon ASTM D2240 et un point de ramollissement déterminé par ASTM E28 à une température supérieure à 40°C et égale ou inférieure à 158°C.
